Europäisches Patentamt

European Patent Office

Office européen des brevets

(11) Veröffentlichungsnummer: **0 320 949**
**A1**

(12) **EUROPÄISCHE PATENTANMELDUNG**

(21) Anmeldenummer: **88121031.4**

(22) Anmeldetag: **15.12.88**

(51) Int. Cl.⁴: **C02F 11/00 , C04B 18/04**

(30) Priorität: **16.12.87 DE 3742664**

(43) Veröffentlichungstag der Anmeldung:
**21.06.89 Patentblatt 89/25**

(84) Benannte Vertragsstaaten:
**AT CH DE ES FR LI NL**

(71) Anmelder: **TIEFBAU GMBH für**
**Abwassertechnik und Ingenieurbau**
**Maler-Becker-Strasse 9**
**D-6500 Mainz 1(DE)**

(72) Erfinder: **Becker, Heinz, Dipl.-Ing.**
**Domitianstrasse 28**
**D-6500 Mainz-Finthen(DE)**

(74) Vertreter: **Klunker . Schmitt-Nilson . Hirsch**
**Winzererstrasse 106**
**D-8000 München 40(DE)**

(54) **Verfahren zum Aushärten von kohlenwasserstoffhaltigen Wasser-Schlamm-Gemischen und Verwendung des ausgehärteten Schlammes.**

(57) Verfahren zum Aushärten von kohlenwasserstoffhaltigen, insbesondere ölhaltigen Wasser-Schlamm-Gemischen durch Zugabe und homogenes Vermischen eines tonerdehaltigen Steinmehls, wobei das Steinmehl einen Calciumoxidanteil enthält, wodurch eine exotherme Reaktion hervorgerufen wird. Die Mischung sollte eine Mächtigkeit bzw. Schichtdicke von mindestens etwa 50 cm aufweisen, damit die durch die exotherme Reaktion freiwerdende Wärme das Aushärten innerhalb von etwa 12 h ermöglicht.

EP 0 320 949 A1

# Verfahren zum Aushärten von kohlenwasserstoffhaltigen Wasser-Schlamm-Gemischen und Verwendung des ausgehärteten Schlammes

Die Erfindung bezieht sich auf ein Verfahren zum Aushärten von kohlenwasserstoffhaltigen, insbesondere ölhaltigen Wasser-Schlamm-Gemischen oder von kohlenwasserstoffverunreinigtem Erdreich, auf einen verfestigten kohlenwasserstoffhaltigen Schlamm sowie auf eine Verwendung des verfestigten Schlammes.

Der weitverbreitete Verbrauch von Kohlenwasserstoffen, insbesondere Mineralölen und Benzinen, erzeugt Abfallprodukte, bei denen das Problem der Beseitigung auftritt. Häufig handelt es sich hierbei um Gemische, die Öl, Wasser und Sand oder Schlamm enthalten. Solche Gemische müssen so weiterbehandelt werden, daß sie schadlos auf Deponien abgelagert werden können. Eine gängige Technik stellt die Trennung der Phasen dar. Aufgrund der Schwerkraft setzen sich Feststoffteilchen, die in diesem Gemisch enthalten sind, nach unten ab, wobei über dieser Feststoffphase eine Flüssigphase entsteht. Die Flüssigphase kann von den Feststoffteilchen abdekantiert werden, wodurch eine erste grobe Trennung erzielt werden kann. Die Flüssigphasen von Wasser und Kohlenwasserstoffen lassen sich häufig aufgrund des Auftretens einer Flüssig/Flüssig-Phasengrenzschicht mit Hilfe der üblichen Labormethoden weiter trennen, so daß auch hier in einer ersten Stufe eine grobe Trennung der einzelnen Flüssigphasen möglich ist. Die Feststoffteilchen enthalten nach diesem Vorgang häufig noch Kohlenwasserstoffe und Wasser, die miteinander so innig ver mischt sind, daß sich diese Substanzen durch Schwerkraft nicht mehr voneinander trennen lassen.

Diese Abfallprodukte können nicht ohne eine entsprechende Weiterbehandlung gelagert werden, da beispielsweise durch Regenwasser eine Auswaschung der Kohlenwasserstoffe aus einem solchen Gemisch möglich ist, wodurch eine erhebliche Umweltbelastung durch Sickern der ausgewaschenen Kohlenwasserstoffe ins Erdreich entsteht.

Als prinzipielle Möglichkeit der Weiterbehandlung solcher Abfallstoffe bietet sich die Verbrennung eines kohlenwasserstoffhaltigen Wasser-Schlamm-Gemisches an. Es wird jedoch wegen des hohen mineralischen Anteils in diesen Abfallstoffen ein hoher Ascheanteil erzeugt, der deponiert werden muß. Ein weiterer Nachteil dieser Art der Weiterbehandlung ist das Auftreten von Immissionsproblemen bei der Verbrennung von kohlenwasserstoffhaltigen Gemischen. Wenn zusätzlich diese kohlenwasserstoffhaltigen Abfallprodukte toxische Inhaltsstoffe, z.B. Schwermetalle, enthalten, ist eine Verbrennung dieser Abfälle sogar verboten.

Lagerungsfähige Abfallstoffe können auf Deponien abgelagert werden. Übliche Deponien sind aus Platzgründen meist kegelförmig ausgegraben, wobei ein sehr steiler Böschungswinkel entsteht. Die Abfälle werden vom oberen Rand der Böschung in die Deponie geschüttet. Dadurch ist es möglich, daß viele Abfallstoffe sich zunächst an den steilen Böschungen anlagern. Durch Regenwasser findet eine Durchsetzung dieser Abfallstoffe statt, wodurch diese Abfallstoffe von den Böschungswinkeln abrutschen können, wodurch Standfestigkeitsprobleme bei diesen Deponien auftreten. Um dies zu verhindern, bietet sich die Möglichkeit, Deponien anzulegen, die sehr flache Böschungswinkel aufweisen. Eine andere Möglichkeit ist gegeben, wenn steile Böschungswinkel in entsprechender Weise abgestützt werden. Doch muß zur Verfestigung meist ein Produkt benutzt werden, das eigentlich gar nicht auf der Deponie gelagert werden müßte und somit nur wertvollen Deponieplatz wegnimmt.

Es ist daher Aufgabe der Erfindung, einen verfestigten kohlenwasserstoffhaltigen, insbesondere ölhaltigen Schlamm und ein Verfahren zu dessen Herstellung anzugeben, mit dem es möglich ist, möglichst viel Schlamm in einer Mischung zu binden. Weiterhin soll eine besonders günstige weitere Verwendung dieses Schlammes angegeben werden.

Lösungen dieser Aufgabe sind in den kennzeichnden Teilen der Ansprüche 1, 10, 11 und 13 angegeben.

Ein für vorliegende Erfindung besonders geeignetes Bindemittel ist unter dem Namen Lipidur (eingetragenes Warenzeichen) erhältliches Steinmehl.

Vorteilhafte Weiterbildungen der Erfindung sind Gegenstand der Unteransprüche.

Aus der DE-OS 32 05 717 ist ein Verfahren zum Fixieren von Schadstoffen in Klärschlämmen bekannt. Die Schadstoffe, die fixiert werden sollen, sind insbesondere Schwermetalle, jedoch keine Kohlenwasserstoffe. Dazu wird der Klärschlamm mit einem Tonmehl vermischt, das sich aus drei Tonmineralien, nämlich Montmorillonit, Kaolinit und Illit, zusammensetzt.

Diese Tonmaterialien enthalten Aluminiumoxide, Siliciumoxide und Wasser, wobei Montmorillonit auch einen geringen Zusatz von Calciumoxid enthält.

Gemäß der deutschen Offenlegungsschrift eignen sich bevorzugt Tonmehle mit einem Anteil von etwa 10 Vol.-% Montmorillonit. Zur Gewährleistung einer ausreichenden Standsicherheit wird ausdrücklich eine Mischung von 20 Vol.-% Tonmehl, 30 Vol.-% Klärschlamm und 50 Vol.-% Sand und Kies empfohlen. Um zu einer ausreichenden Standsicherheit zu gelangen, müssen demzufolge erhebliche Anteile an Sand und Kies zugemischt werden. Darüber hinaus erfolgt die Fixierung der Schwermetalle nicht durch eine exotherme Reaktion und nicht mechanisch, sondern durch den Einbau der Schwermetalle in das Kristallgitter des Montmorillonits.

Aus "WLB, Wasser, Luft und Betrieb, 6-83, S. 49/50", ist bekannt, Abfallschlamm in der Gegenwart von Flugasche aus Müllverbrennungsanlagen unter Zugabe eines nicht-toxischen Spezialbindemittels zu verfestigen und derart verfestigte Produkte als Füllmasse beim Straßenbau und zur Untergrundbefestigung zu verwenden.

Aus diesen beiden Druckschriften sind demnach Verfahren bekannt, einen Abfallschlamm zu verfestigen, wobei zur Gewährleistung einer ausreichenden Standsicherheit bei beiden Verfahren ein zusätzlicher Stoff, nämlich Sand und Kies einerseits bzw. Flugasche andererseits, erforderlich ist.

Mit dem erfindungsgemäßen Verfahren ist es möglich, kohlenwasserstoffhaltige Wasser-Schlamm-Gemische, insbesondere solche Gemische, die Öle, beispielsweise Altöl, enthalten, mit Hilfe eines mineralischen,calciumoxidhaltigen Bindemittels ohne Zusatz eines weiteren Stoffes so zu verfestigen, daß aus dem entstehenden Reaktionsprodukt ein Ausschleppen der Kohlenwasserstoffe durch Wasser nicht mehr möglich ist. Das Endprodukt zeichnet sich durch eine hohe Tragfestigkeit aus, wodurch ein Transport sowie die Verladung dieses Produktes problemlos möglich sind. Aufgrund der hohen Tragfestigkeit des Produktes eignet es sich besonders zur Stabilisierung von Deponien, es kann jedoch genauso beim Straßen- bzw. Wegebau eingesetzt werden. Das entstehende Produkt kann auf Hausmülldeponien gelagert werden, wobei gewährleistet ist, daß keine gefährlichen Stoffe, die die Umwelt belasten könnten, in das darunterliegende Erdreich gelangen können. Mit Hilfe des erfindungsgemäßen Verfahrens ist es ebenso möglich, ölverseuchtes Erdreich, beispielsweise aufgrund von Tanklastunfällen, zu verarbeiten. Ein weiterer vorteilhafter Aspekt der Erfindung liegt darin, daß bei Anwesenheit von Schwermetallen in diesem kohlenwasserstoffhaltigen Wasser-Schlamm-Gemisch das Auswaschen dieser Schwermetalle ebenfalls nicht mehr möglich ist, da die Schwermetalle in dem Endprodukt mechanisch fest eingebaut sind.

Durch das Zusammenbringen des Wasser-Schlamm-Gemisches mit dem tonerdehaltigen Steinmehl, das sich durch eine besonders hohe Adsorptionsfähigkeit auszeichnet und eine hydraulische Komponente enthält, die die Verfestigung des Wasser-Schlamm-Gemisches verursacht, erfolgt durch die Umwandlung des in dem Steinmehl enthaltenen Calciumoxids in Calciumhydroxid eine exotherme Reaktion. Wegen der dabei freiwerdenden Wärme härtet das Gemisch so weit aus, daß es problemlos verladbar ist. Ein vorteilhafter Aspekt für die Durchführung des Verfahrens besteht darin, daß wegen der exothermen Reaktion das Gemisch unabhängig von der Umgebungstemperatur aushärtet. Dies bedeutet, daß die Reaktion im Freien unabhängig von der Umgebungstemperatur durchgeführt werden kann.

Es wurden zunächst Versuche im halbtechnischen Maßstab (30 bis 50 l) durchgeführt. Es zeigte sich, daß das Reaktionsgemisch aus Wasser-Schlamm-Gemisch und dem tonerdehaltigen Steinmehl nur äußerst langsam oder gar nicht aushärtete. Überraschenderweise zeigte sich, daß bereits die ersten Versuche in einer Großanlage sehr erfolgreich waren. Dies zeigt die Bedeutung der Mindestmächtigkeit. Das Steinmehl wurde mit dem kohlenstoffhaltigen Wasser-Schlamm-Gemisch vermischt, wobei das Reaktionsprodukt nach etwa 12 Stunden ausgehärtet war.

Die ausgehärtete Reaktionsmasse wurde drei verschiedenen Eluatversuchen unterworfen, um zu überprüfen, inwieweit Kohlenwasserstoffe durch Wasser ausgeschwemmt werden können. Dazu wurden drei Verfahren angewandt, die nachfolgend genauer beschrieben werden. Das Verfahren nach DIN 38 414 S4 stellt einen Auswaschvorgang dar, die Elution mit Hilfe einer Soxhlet-Apparatur simulierte eine länger andauernde Elution bei erhöhter Temperatur, und mit Hilfe der Elutionsergebnisse aus einer Triaxialzelle sollten die Druckverhältnisse nachempfunden werden, die in einer Hausmülldeponie vorliegen können. Es zeigte sich, daß bei diesen Untersuchungen Kohlenwasserstoffe von maximal 0,5 bis 1 mg/l mit Hilfe von Wasser eluiert werden konnten.

Die Versuche mit der Triaxialzelle speziell zeigten, daß die Reaktionsprodukte, die nach dem erfindungsgemäßen Verfahren hergestellt wurden, überhaupt kein Eluat erzeugten. Es konnte keinerlei Durchsickern von Kohlenwasserstoffen bei 1,0 bar Überdruck festgestellt werden.

Zur Durchführung des Verfahrens wurde ein Gemisch verwendet, das Wasser, Kohlenwasserstoffe, insbesondere Öle, und Schlammteilchen enthält. Die Ölkonzentration eines solchen Gemisches liegt üblicherweise im Bereich von 10 bis 20 %. Der Feststoffanteil schwankt sehr stark und kann bis zu 30 % erreichen, und der Wasseranteil kann bis zu 50 % ausmachen. Einzelne Phasen können bei diesem Gemisch nicht mehr festgestellt werden, so daß eine Trennung der Phasen nicht mehr möglich ist. Dieser Schlamm wird zu einem Mischer, beispielsweise mit Hilfe von geeigneten Pumpen, gefördert. Im Mischer werden das Schlamm-Gemisch und das tonerdehaltige Steinmehl in einem Verhältnis von 2 Teilen Schlamm-Gemisch zu 0,85 bis 1,5 Teilen Steinmehl gemischt. Zum Mischen eignen sich verschiedene Mischertypen, besonders ein Freifallmischer. Es muß so lange gemischt werden, bis eine Homogenisierung der Reaktionsmasse gewährleistet ist. Beispielsweise beträgt die Mischzeit im Freifallmischer, der einen optimalen Füllgrad aufweist, 3 Minuten. Durch den Mischvorgang werden die Öltröpfchen, die in dem Wasser-Schlamm-Gemisch enthalten sind, durch den Tonanteil im hydraulischen Bindemittel adsorbiert. Aufgrund des sehr hohen Adsorptionsbestrebens des tonerdehaltigen Steinmehls befinden sich an der Oberfläche des Wasser-Schlamm-Gemi sches nur sehr wenige Öltröpfchen. Das tonerdehaltige Steinmehl kann bis zu 600 g Öl pro kg adsorbieren.

Nach der Homogenisierung im Mischer kann die Reaktionsmischung aushärten. Die Aushärtungszeit beträgt für gewöhnlich 12 Stunden. Es sollte darauf geachtet werden, daß die Aushärtungszeit 15 Stunden nicht übersteigt, da sonst ein Durchhärten der gesamten Reaktionsmasse erfolgen kann, wobei sich ein solches durchgehärtetes Produkt sehr schwer verladen und abtransportieren läßt.

Zum Aushärten eignet sich besonders ein Reaktionsbecken. Nach dem Mischen wird das Reaktionsgemisch in ein Reaktionsbecken umgefüllt, das beispielsweise ein Volumen von 40 m³ aufweisen kann. Es muß jedoch darauf geachtet werden, daß die Schichtdicke bzw. die Mächtigkeit des Reaktionsgemisches mindestens 50 cm betragen muß, da sonst die durch die Reaktion freiwerdende Wärme zu gering ist und das Gemisch nicht ausreichend aushärten kann. Das Reaktionsbecken weist drei Seitenwände und einen schrägen Boden auf, dessen Schräge in Richtung zu der offenen Seite des Reaktionsbeckens nach oben verläuft. Dadurch ist es möglich, daß Ladeeinrichtungen, beispielsweise Frontlader oder Bagger, in das Reaktionsbecken hineinfahren können und das ausgehärtete Produkt aufnehmen und abtransportieren können. Das Reaktionsbecken verfügt weiterhin über einen Überlauf, um überschüssiges Wasser bzw. Niederschlagswasser abführen zu können. Ist der Ölanteil in der Reaktionsmischung höher, als es der Adsorptionsfähigkeit des Steinmehls entspricht, sammeln sich Ölfladen an der Oberseite des Reaktionsgemisches. Diese Flüssigkeitsphase wird aufgesammelt und erneut einem weiteren Mischvorgang mit Steinmehl zugeführt.

Das Mischungsverhältnis ist abhängig von der Umgebungstemperatur. Bei Temperaturen von mehr als 20 °C kann der Steinmehlanteil auf 0,95 bis 0,85 gesenkt werden, wodurch trotzdem eine ausreichende Reaktionswärme für das Aushärten der Reaktionsmasse freiwird. Bei tieferen Temperaturen ist es nötig, den Steinmehlanteil zu erhöhen, damit das Produkt innerhalb von etwa 12 Stunden aushärtet. Beispielsweise ist bei einer Temperatur von +3 °C ein Steinmehlanteil von 1,1 erforderlich, der bei einer Temperatur von 0 °C weiter auf 1,3 bis 1,5 erhöht werden muß. Bei -8 °C sind 1,5 Teile Steinmehl für 2 Teile kohlenwasserstoffhaltiges Wasser-Schlamm-Gemisch erforderlich.

Das ausgehärtete Reaktionsprodukt kann mit einer beliebigen Ladeeinrichtung zu der Deponie transportiert werden. Der verfestigte kohlenwasserstoffhaltige Schlamm eignet sich insbesondere zur Verfestigung von Deponien und deren Böschungsabschüttungen, so daß zur Stabilisierung von solchen Deponien solche Produkte verwendet werden können, die ohnehin auf diesen Deponien gelagert werden müssen. Dadurch ist es möglich geworden, den Deponieraum von solchen Stoffen freizuhalten, die dort gar nicht abgelagert werden müssen. Weiterhin eignet sich der verfestigte kohlenwasserstoffhaltige Schlamm auch zum Wegebau.

Um die Verhältnisse in einer Hausmülldeponie nachempfinden zu können, wurden die drei folgenden Eluatversuche durchgeführt.

1. DIN 38 414 S4
100 g ausgehärtete Reaktionsmasse wurden in einer Glasflasche mit 1 l destilliertem Wasser versetzt und 24 Stunden geschüttelt. Das Eluat wurde vorsichtig über einen weichen Papierfilter abfiltriert. Das so gewonnene Eluat wurde auf Kohlenwasserstoffe untersucht.

2. Elution mit Hilfe einer an sich bekannten Soxhlet-Apparatur.

3. Elution in einer Triaxialzelle.
Es wurden zylindrische Probenkörper von ca. 10 cm Durchmesser und ca. 10 cm Höhe gegossen. Diese Körper wurden mit einem Kunststoffmantel umgeben und am oberen und unteren Rand gegen den Kunststoffmantel abgedichtet, damit keine Randläufigkeit auftreten konnte. Der so vorbereitete Zylinder wurde in eine Apparatur gestellt, die es ermöglicht, Wasserdruck von außen auf den Kunststoffmantel zu geben und so den Probekörper abzudichten, ohne Wasser in den Probekörper eindringen zu lassen. Nun wurde Wasser mit einem bestimmten Vordruck (1,0 bar) auf die untere Fläche des Zylinders gegeben. Der Zylinder konnte nun von unten nach oben durchströmt werden. Die Elution lief mindestens 72 Stunden.

Die Elution nach 1. stellt einen Auswaschvorgang dar, die Elution nach 2. simulierte eine länger andauernde Elution bei erhöhter Temperatur (ca. 25 °C, Elutionszeit: bis zu 72 Stunden), während die Triaxialzelle die Druckverhältnisse im Deponiekörper nachahmte.

Die Eluatuntersuchungen nach DIN 38 414S4 zeigten Ergebnisse zwischen 5 und 10 mg/kg Trokenmasse. Dies entspricht einer Eluatkonzentration von 0,5 bis 1 mg/l Eluat. Die Ergebnisse der Soxhlet-Elution waren mit den Ergebnissen nach DIN 38 414S4 vergleichbar. Die Versuche mit der Triaxialzelle zeigten, daß die Reaktionskörper kein Eluat erzeugten. Es konnte keinerlei Durchsickern festgestellt werden. Offensichtlich war der Reaktionskörper an den Oberflächen so feinporig, daß kein Wasser eindringen und somit Öl ausschleppen konnte. Wurde der Reaktionskörper quer aufgeschnitten, so trat Eluat auf, wobei die Eluatkonzentration 0,5 bis 1 mg/l Eluat betrug. Es ergaben sich folglich die gleichen Ergebnisse wie bei den Versuchen nach 1. und 2.

Druckmessungen haben ergeben, daß das ausgehärtete Produkt einen Druck von etwa 8 N/mm² aushält.

**Ansprüche**

1. Verfahren zum Aushärten von kohlenwasserstoffhaltigen, insbesondere ölhaltigen Wasser-Schlamm-Gemischen durch Zugabe und homogenes Vermischen eines tonerdehaltigen Steinmehls, wobei das Steinmehl einen Calciumoxidanteil enthält, wodurch eine exotherme Reaktion hervorgerufen wird, und durch Aushärten der Mischung, wobei die Mischung eine Mächtigkeit von mindestens etwa 50 cm aufweist.

2. Verfahren nach Anspruch 1, gekennzeichnet durch einen Mischvorgang von 2 Teilen des Wasser-Schlamm-Gemisches mit 0,85 bis 1,5 Teilen des Steinmehls.

3. Verfahren nach einem der Ansprüche 1 oder 2, dadurch gekennzeichnet, daß der Reaktionsvorgang in einem Umgebungstemperaturbereich von etwa -8 °C bis etwa +30 °C durchgeführt und im niedrigeren Temperaturbereich ein höherer und im höheren Temperaturbereich ein niedriger Steinmehlanteil zugemischt wird.

4. Verfahren nach mindestens einem der Ansprüche 1 bis 3, dadurch gekennzeichnet, daß bei einer Umgebungstemperatur von etwa 20 °C oder darüber ein Steinmehlanteil von etwa 0,85 bis 0,95 zugemischt wird.

5. Verfahren nach mindestens einem der Ansprüche 1 bis 4, dadurch gekennzeichnet, daß ein tonerdehaltiges Steinmehl zugemischt wird, das bis zu 600 g der Kohlenwasserstoffe pro kg Steinmehl zu adsorbieren vermag.

6. Verfahren nach mindestens einem der Ansprüche 1 bis 5, dadurch gekennzeichnet, daß das Wasser-Schlamm-Gemisch und das Steinmehl in einem Freifallmischer gemischt werden.

7. Verfahren nach mindestens einem der Ansprüche 1 bis 6, dadurch gekennzeichnet, daß das Wasser-Schlamm-Gemisch und das Steinmehl etwa 3 Minuten gemischt werden.

8. Verfahren nach mindestens einem der Ansprüche 1 bis 7, gekennzeichnet durch eine Aushärtzeit von etwa 12 Stunden.

9. Verfahren nach mindestens einem der Ansprüche 1 bis 8, dadurch gekennzeichnet, daß die homogene Mischung in ein Reaktionsbecken gefüllt wird, das eine Mindesttiefe von etwa 50 cm aufweist.

10. Ausgehärteter kohlenwasserstoffhaltiger Schlamm, erhältlich durch ein Verfahren nach mindestens einem der Ansprüche 1 bis 9.

11. Verwendung des ausgeharteten Schlammes gemäß Anspruch 10 zur Stabilisierung von Deponien.

12. Verwendung des ausgeharteten Schlammes nach einem der Ansprüche 10 oder 11 zur Verfestigung der Böschungsabschüttung von Deponien.

13. Verwendung des ausgehärteten Schlammes gemäß Anspruch 10 zum Wegebau.

# EUROPÄISCHER RECHERCHENBERICHT

Nummer der Anmeldung

EP 88 12 1031

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,P | PROF. THOME-KOZMIENSKY: "Behandlung von Sonderabfällen (Seminar)", Sommer 1988, ISBN 3924511 29 2, pages 518-552, EF Verlag für Energie und Umwelttechnik, DE; L.J. GERSCHLER: "Verfestigung von Sonderabfällen" * Seite 520, Absatz 2; Seite 527, Absatz 4.1 - Seite 530, Zeile 2 * --- | 1,6,10, 11,13 | C 02 F 11/00 C 04 B 18/04 |
| A | H.U. WIEDEMANN: "Verfahren zur Verfestigung von Sonderabfällen und Stabilisierung von Verunreinigten Böden", UBA-Berichte 1/82, 1982, Seiten 108-125, Erich Schmidt Verlag, Berlin, DE * Seite 109, Absatz 5.9.2 - Seite 110, Zeile 5; Seite 111, Zeilen 3-20; Seite 123, Absatz 5.9.4 - Seite 125 * --- | 1,11,13 | |
| A | DE-A-3 227 000 (FRITSCH) * Ansprüche 1,2,5,8; Beispiel 5 * --- | 1 | |
| A | DE-A-2 810 173 (KNAUF) * Seite 12, Beispiel 1 - Seite 14, Beispiel 5 * --- | 1-3 | RECHERCHIERTE SACHGEBIETE (Int. Cl.4) C 02 F C 04 B |
| A | US-A-4 144 162 (A.C. EDGAR) * Anspruch 1; Spalte 3, Zeilen 21-31 * --- | 1 | |
| A | CHEMICAL ABSTRACTS, Band 93, Nr. 20, 17. November 1980, Seite 326, Zusammenfassung Nr. 191521y, Columbus, Ohio, US; L.J. GERSCHLER et al.: "Solidification of special wastes by the Meissner-Grundbau method", & BANYASZ. KOHASZ. LAPOK, KOOLAJ FOLDGAZ 1980, 13(7), 212-14 --- -/- | 1 | |

Der vorliegende Recherchenbericht wurde für alle Patentansprüche erstellt

| Recherchenort | Abschlußdatum der Recherche | Prüfer |
|---|---|---|
| DEN HAAG | 29-03-1989 | KASPERS H.M.C. |

EPO FORM 1503 03.82 (P0403)

# EUROPÄISCHER RECHERCHENBERICHT

Europäisches Patentamt

Nummer der Anmeldung

EP 88 12 1031

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-2 033 368 (LEIGH INTERESTS) --- | | |
| A,D | DE-A-3 205 717 (BAUSTOFF-PRÜF-GESELLSCHAFT BONN HERSEL) ----- | | |

RECHERCHIERTE SACHGEBIETE (Int. Cl.4)

Der vorliegende Recherchenbericht wurde für alle Patentansprüche erstellt

| Recherchenort | Abschlußdatum der Recherche | Prüfer |
|---|---|---|
| DEN HAAG | 29-03-1989 | KASPERS H.M.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

...............................................................

& : Mitglied der gleichen Patentfamilie, übereinstimmendes Dokument

EPO FORM 1503 03.82 (P0403)